# EUROPEAN PATENT APPLICATION

(11) **EP 4 679 605 A1**
(43) Date of publication of application: **14.01.2026**
(21) Application number: 24767258.7
(22) Date of filing: 08.03.2024
(51) Int. Cl.: H01M 50/35, H01G 11/12, H01G 11/14, H01G 11/78, H01M 50/209, H01M 50/291, H01M 50/342, H01M 50/358, H01M 50/507

(54) **POWER STORAGE DEVICE**

(30) Priority: 08.03.2023 JP 2023035324
(71) Applicant: GS Yuasa International Ltd., Kisshoin, Minami-ku, Kyoto-shi, Kyoto 601-8520 (JP); Blue Energy Co., Ltd., Kyoto-shi, Kyoto 601-8520 (JP)
(72) Inventor: YUASA, Eiji, Kyoto-shi, Kyoto 601-8520 (JP); MIZUNO, Ryo, Kyoto-shi, Kyoto 601-8520 (JP); TOSHIOKA, Yoshimasa, Kyoto-shi, Kyoto 601-8520 (JP); NAKAMURA, Hiromu, Kyoto-shi, Kyoto 601-8520 (JP)
(74) Representative: Isarpatent
(86) International application number: PCT/JP2024/009157
(87) International publication number: WO 2024/185893

(57) **Abstract**

Provided in this embodiment is an electric storage apparatus includes: a plurality of electric storage devices arranged in a first direction and each including a gas release valve directed in a second direction orthogonal to the first direction; a duct part disposed to overlap the gas release valve of each of the electric storage devices in the second direction; an adjacent member including a body located between each adjacent ones in the first direction of electric storage devices, and a locking piece extending from the body along the duct part in a direction away in the second direction from the body to lock the duct part; and an abutment part in abutment with the locking piece from an opposite side to the duct part in a third direction orthogonal to each of the first direction and the second direction.

## Description

### CROSS-REFERENCE TO RELATED APPLICATION

This application claims priority to Japanese Patent Application No. 2023-035324, and the disclosure of Japanese Patent Application No. 2023-035324 is incorporated herein by reference in its entirety.

### FIELD

The present invention relates to an electric storage apparatus including a plurality of electric storage devices.

### BACKGROUND

Conventionally known is an electric storage module including a duct apparatus (see Patent Literature 1). As shown in Fig. 17, this electric storage module 400 is composed of a cooling structure 401 and an electric storage block 402. The electric storage block 402 includes a device stack 405 including a plurality of unit cells 403 arranged to form a stack, and a duct apparatus 450 as a pressing apparatus for pressing the device stack 405 toward the cooling structure 401.

The device stack 405 includes the plurality of unit cells 403 and a plurality of cell holders 404a, 404b. Each of the unit cells 403 includes an angular-shaped cell container formed of a cell can and a cell cover 403a. The cell cover 403a has a positive terminal 403b and a negative terminal 403c. The cell cover 403a has a gas release valve 403d. The gas release valve 403d is configured to rupture when the unit cell 403 is heated due to abnormality such as overcharging to generate a gas that increases the pressure within the cell container to a specific value, so that the gas therewithin is discharged to reduce the pressure within the cell container. The plurality of unit cells 403 are arranged to be stacked on each other in a back and forth direction via the cell holders 404a, 404b to form the device stack 405. This device stack 405 is held by an integration mechanism.

The integration mechanism includes a pair of end plates 410 and a pair of side frames 411, and binds the plurality of unit cells 403 arranged to be stacked on each other via the cell holders 404a, 404b. The pair of end plates 410 are disposed respectively on a front and back of the device stack 405 to sandwich the device stack 405 in the back and forth direction, i.e., in a stacking direction. The pair of side frames 411 are disposed symmetrically on a left and right of the device stack 405. The device stack 405 integrated by being bound by the integration mechanism thus configured is assembled to the cooling structure 401.

The cooling structure 401 includes a heat transfer plate 401a having a rectangular parallelepiped shape, and a cooling pipe 401b arranged inside the heat transfer plate 401a.

Disposed on an upper part of the device stack 405 is the duct apparatus 450 configured to guide the gas discharged through the gas release valves 403d of the respective unit cells 403 to the outside of a vehicle. This duct apparatus 450 has a gas guiding part 451 extending in the stacking direction, i.e., the back and forth direction, of the device stack 405. The gas guiding part 451 is a tubular member having a hollow rectangular shape that includes an upper plate, a lower plate, and a pair of side plates connecting the upper plate and the lower plate to each other to form a flow passage having a rectangular shape in cross section. The lower plate of the gas guiding part 451 has openings for introducing the gas at positions opposite to the gas release valves 403d of the respective unit cells 403.

The duct apparatus 450 includes a pair of leg parts 452 extending downward from a front end of the gas guiding part 451, and a pair of leg parts 452 extending downward from a rear end of the gas guiding part 451. Each of the pair of leg parts 452 includes a leg part attaching piece 452a screwed to the heat transfer plate 401a by a screw 455. A guiding part attaching piece 451a screwed to the end plate 410 by a screw 456 is disposed near each of the front end and the rear end of the gas guiding part 451.

### CITATION LIST

### Patent Literature

Patent Literature 1: JP 2017-212214 A

### SUMMARY

### Technical Problem

In the electric storage module configured as above, the gas guiding part 451 is fixed only at the front end and the rear end with respect to the device stack 405. This configuration sometimes causes an intermediate portion of the gas guiding part 451 to be displaced (moved) from the original position due to, e.g., the pressure of the gas when the gas is discharged through the gas release valve 403d of the unit cell 403, which results in gas leakage occurring between the gas guiding part 451 and the device stack 405.

It is an object of this embodiment to provide an electric storage apparatus capable of suppressing the duct part from moving from a position at which the duct part is locked.

### Solution to Problem

An electric storage apparatus of this embodiment includes: a plurality of electric storage devices arranged in a first direction, the plurality of electric storage devices each including a gas release valve directed in a second direction orthogonal to the first direction; a duct part disposed to overlap the gas release valve of each of the electric storage devices in the second direction and configured to guide a gas discharged through the gas release valve; an adjacent member including a body located between each adjacent ones in the first direction of the electric storage devices, and a locking piece extending from the body along the duct part in a direction away in the second direction from the body to lock the duct part; and an abutment part in abutment with the locking piece from an opposite side to the duct part in a third direction orthogonal to each of the first direction and the second direction.

### BRIEF DESCRIPTION OF DRAWINGS

Fig. 1 is a perspective view of an electric storage apparatus according to this embodiment.
Fig. 2 is an exploded perspective view of the electric storage apparatus.
Fig. 3 is a perspective view of an apparatus body with a duct part attached thereto.
Fig. 4 is a view of the apparatus body with the duct part attached thereto, as viewed from one side in a Z-axis direction.
Fig. 5 is an exploded perspective view of the apparatus body.
Fig. 6 is a perspective view of a first adjacent member in the apparatus body.
Fig. 7 is a perspective view of a second adjacent member in the apparatus body.
Fig. 8 is a view of the duct part as viewed from a Y-axis direction.
Fig. 9 is a view of the duct part as viewed from an other side in the Z-axis direction.
Fig. 10 is an enlarged view of an upper part in cross section at the X-X position in Fig. 4.
Fig. 11 is an enlarged view of a portion shown by XI in Fig. 2.
Fig. 12 is a view of a portion shown by XI in Fig. 2 as viewed from the one side in the Z-axis direction.
Fig. 13 is a view of a portion shown by XIII in Fig. 1 as viewed from the one side in the Z-axis direction.
Fig. 14 is an enlarged view of the duct part and a portion therearound in cross section taken along line XIV-XIV in Fig. 13.
Fig. 15 is a cross-sectional end view of a duct part and a portion therearound of an electric storage apparatus according to another embodiment.
Fig. 16 is an enlarged perspective view of a pair of first locking pieces and a portion therearound of a first adjacent member according to another embodiment.

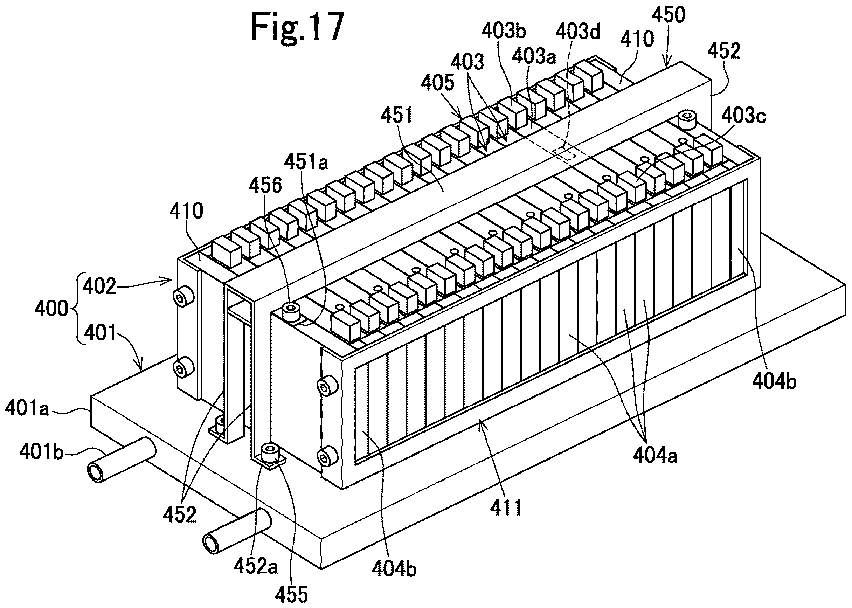

Fig. 17 is a perspective view of a conventional electric storage module.

### DESCRIPTION OF EMBODIMENTS

(1) An electric storage apparatus according to one embodiment of the present invention includes: a plurality of electric storage devices arranged in a first direction, the plurality of electric storage devices each including a gas release valve directed in a second direction orthogonal to the first direction; a duct part disposed to overlap the gas release valve of each of the electric storage devices in the second direction and configured to guide a gas discharged through the gas release valve; an adjacent member including a body located between each adjacent ones in the first direction of the electric storage devices, and a locking piece extending from the body along the duct part in a direction away in the second direction from the body to lock the duct part; and an abutment part in abutment with the locking piece from an opposite side to the duct part in a third direction orthogonal to the first direction and the second direction.

As in the electric storage apparatus according to one embodiment of the present invention, the abutment part is brought into abutment with the locking piece from the opposite side in the third direction to the duct part in the state where the duct part is locked to the adjacent members by the locking piece, so that the abutment part suppresses the locking piece from moving to a side in the third direction away from the duct part. This configuration can effectively suppress the duct part from moving from the position (locked position) at which the duct part is locked by the locking piece.

(2) In the electric storage apparatus of (1) above, the configuration can be such that the abutment part presses the locking piece toward the duct part.

According to the electric storage apparatus of (2) above, the configuration that the locking piece is pressed at the duct part can further reliably suppress the locking piece from moving to the direction away in the third direction from the duct part. Even in the case where the locking piece is not pressed by the abutment part and a gap resulting from, e.g., manufacturing error is formed between the locking piece and the duct part, the configuration that the locking piece is pressed at the duct part by the abutment part can reduce the gap. Thus, the above configuration can further reliably suppress the duct part from moving from the locked position.

(3) In the electric storage apparatus of (1) or (2) above, the configuration can be such that the electric storage apparatus further includes a cover part covering a bus bar for electrically connecting the electric storage devices to each other, the cover part being disposed at a position at which the cover part is in abutment with one of the electric storage devices and the adjacent member on one side in the second direction, in which the duct part is disposed on the one side in the second direction of the electric storage devices, and the cover part includes the abutment part.

As in the electric storage apparatus according to (3) above, the cover part is disposed in abutment with one of the electric storage devices and the adjacent member on the one side in the second direction, so that the abutment part is in abutment with the locking piece, thereby enabling the assembly work of the electric storage apparatus to be simplified.

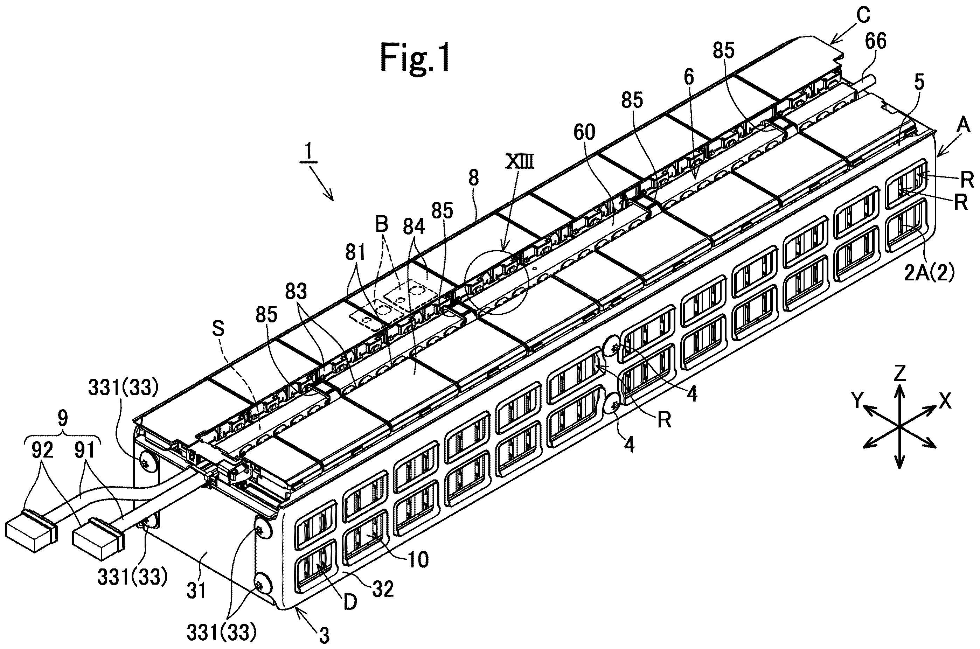

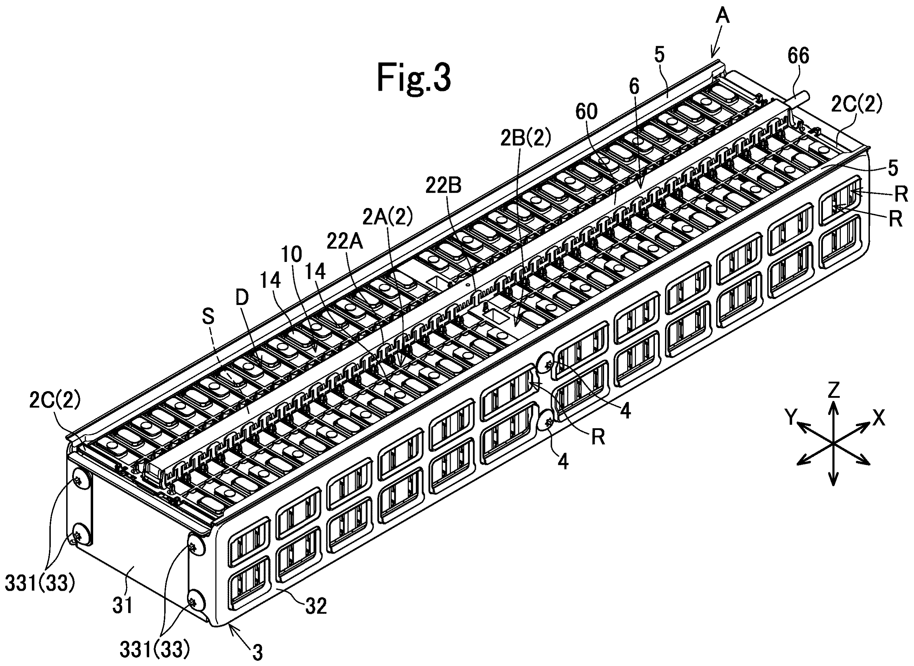

A description will be hereinafter given on one embodiment of the present invention with reference to Fig. 1 to Fig. 14. The names of parts and members (components) of this embodiment are applicable to those in this embodiment, and may differ from the names of parts and members (components) in the background art.

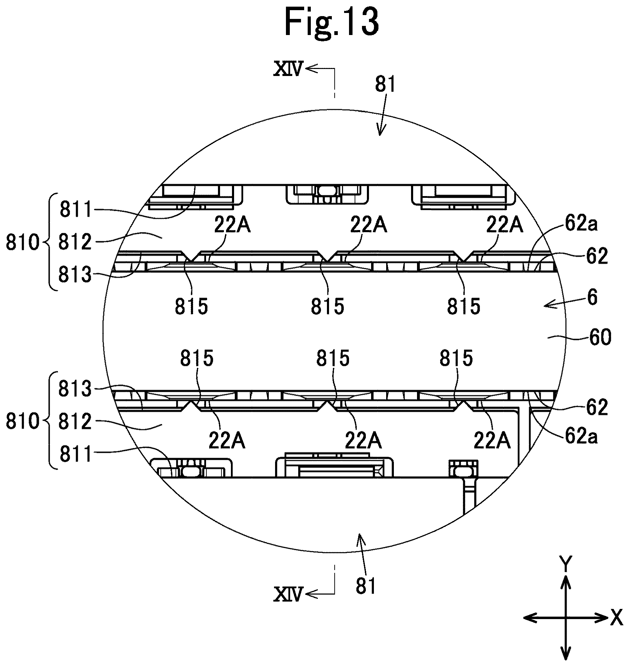

As shown in Fig. 1 to Fig. 5, an electric storage apparatus 1 includes: a plurality of electric storage devices 10 arranged in a first direction and each including a gas release valve 132; a duct part 6 disposed to overlap the gas release valve 132 of each of the electric storage devices 10 and configured to guide a gas discharged through the gas release valve 132; an adjacent member 2 including a locking piece 22A, 22B for locking the duct part 6; and an abutment part in abutment with the locking piece 22A, 22B. The electric storage apparatus 1 includes a cover part C for covering a bus bar B that electrically connects the electric storage devices 10 with each other. In the electric storage apparatus 1 of this embodiment, the abutment part is a portion or a member for pressing the locking piece 22A, 22B toward the duct part 6, and is formed of a projecting part 815 as a part of the cover part C (see Fig. 13).

The electric storage apparatus 1 includes an apparatus body A including the plurality of electric storage devices 10; the duct part 6 attached to the apparatus body A; a sealing part 7 disposed between the apparatus body A and the duct part 6; and a cover part C placed in abutment with a portion of the apparatus body A to which the duct part 6 is attached. Hereinafter, a direction (first direction) in which the plurality of electric storage devices 10 are arranged is referred to as an X-axis direction of the orthogonal coordinate system, a direction (second direction) in which the apparatus body A and the cover part C are arranged is referred to as a Z-axis direction of the orthogonal coordinate system, and a direction (third direction) orthogonal to each of the X-axis direction and the Z-axis direction is referred to as a Y-axis direction of the orthogonal coordinate system.

The apparatus body A includes a stack D in which the plurality of electric storage devices 10 and the adjacent members 2 are arranged alternately with each other in the X-axis direction, and a holding part 3 for holding the stack D. The apparatus body A includes a first fixing part 4 for fixing the adjacent member 2 to the holding part 3, and an insulator 5 for insulation between the stack D and the holding part 3.

Each of the electric storage devices 10 is, for example, a primary cell, a secondary cell, or a capacitor. The electric storage device 10 of this embodiment is a rechargeable nonaqueous electrolyte secondary cell. More specifically, the electric storage device 10 is a lithium-ion secondary battery cell that utilizes the movement of electrons caused by the movement of lithium ions.

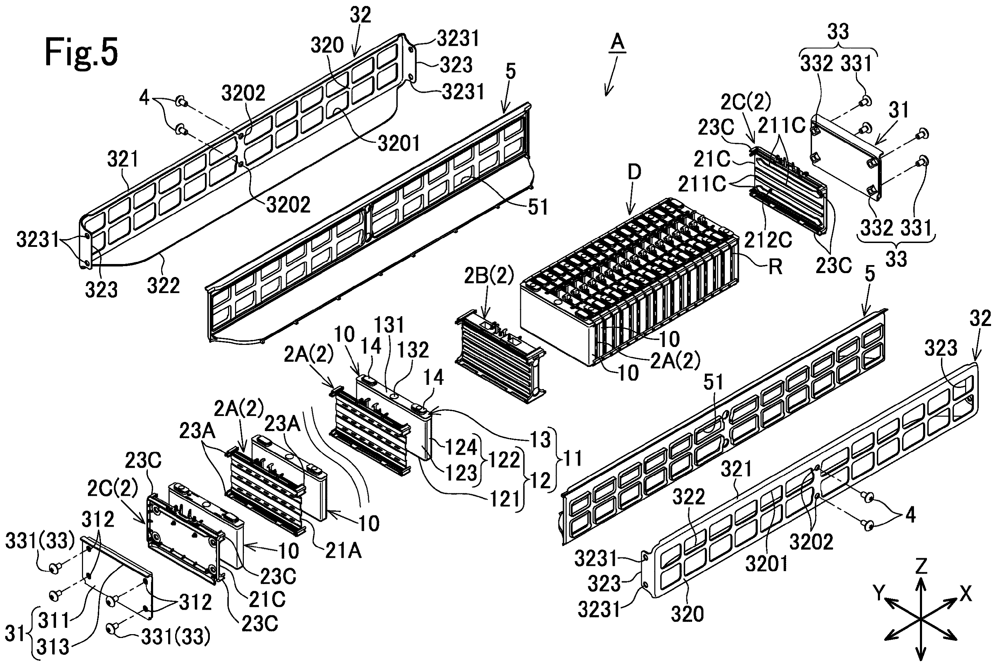

The electric storage device 10 includes an electrode assembly, a case 11 for housing the electrode assembly together with an electrolyte, a terminal 14 partially exposed outside the case 11, and a current collector connecting the electrode assembly and the terminal 14 with each other. The electric storage device 10 of this embodiment includes a pair of the terminals 14. The pair of terminals 14 are disposed at one end in the Z-axis direction (i.e., upper end in Fig. 5) of the electric storage device 10 with a distance in the Y-axis direction therebetween.

The electrode assembly has positive electrode plates and negative electrode plates alternately stacked on each other with separators therebetween. The electric storage device 10 is configured to charge and discharge electricity when lithium ions move between the positive electrode plates and the negative electrode plates in the electrode assembly.

The case 11 includes a case body 12 having an opening at one end in the Z-axis direction, and a cover plate 13 having a plate shape for closing the opening of the case body 12. The case body 12 has an angular tubular shape with an other end in the Z-axis direction (i.e., lower end in Fig. 5) closed (i.e., has a bottomed angular tubular shape). The case 11 has a rectangular parallelepiped shape (hexahedral shape).

The case body 12 includes a closing part 121 having a plate shape, and a body part (peripheral wall) 122 having a tubular shape and extending from a periphery of the closing part 121.

The closing part 121 is located at the lower end of the case body 12 when the case body 12 is disposed to have its opening directed upward (that is, serves as a bottom wall of the case body 12 when the opening is directed upward). The closing part 121 has a rectangular shape as viewed from the Z-axis direction.

The body part 122 has an angular tubular shape, more specifically, a flat angular tubular shape. The body part 122 has a pair of long walls 123 respectively extending from the long sides in the peripheral edge of the closing part 121, and a pair of short walls 124 respectively extending from the short sides in the peripheral edge of the closing part 121. In the body part 122, each of the pair of short walls 124 connects ends of the pair of long walls 123 facing each other in the X-axis direction to thereby form the body part 122 having an angular tubular shape.

The cover plate 13 is a plate-shaped member for closing the opening of the case body 12. The cover plate 13 includes a cover plate body 131 having a rectangular plate shape elongated in the Y-axis direction, and the gas release valve 132 disposed in the cover plate body 131.

The gas release valve 132 is configured to release a gas to the outside when the gas generated in the case 11 causes the pressure within the case 11 to exceed a specific value. The gas release valve 132 of this embodiment is disposed in a central portion in the Y-axis direction of the cover plate body 131. The gas release valve 132 of this embodiment has a circular shape as viewed from the Z-axis direction.

The cover plate 13 thus configured has its peripheral edge part placed to be in abutment with an opening peripheral edge part of the case body 12, and is then bonded to the case body 12 to form the case 11.

Each of the pair of terminals 14 is a portion electrically connected with the terminal 14 of another electric storage device 10, an external device, or the like. The terminal 14 is formed of a member having conductivity. The terminal 14 is formed of an aluminum-based metal material such as aluminum or an aluminum alloy, or a copper-based metal material such as copper or a copper alloy.

The pair of terminals 14 are disposed at both end parts in the Y-axis direction of the cover plate 13. The pair of terminals 14 are disposed at positions on the cover plate 13 with the gas release valve 132 located therebetween.

The electric storage device 10 configured as above has a flat rectangular parallelepiped shape. The plurality of electric storage devices 10 are arranged in the X-axis direction with wide surfaces (long walls 123) of the cases 11 facing each other via the respective adjacent members 2 interposed therebetween. The gas release valves 132 of the plurality of electric storage devices 10 are arranged in a row in the X-axis direction. The terminals 14 on one side and the terminals 14 on the other side of the electric storage devices 10 are arranged in the X-axis direction at positions with the row of the gas release valves 132 located therebetween.

The adjacent members 2 have insulation, and are each disposed between electric storage devices 10 arranged in the X-axis direction, or between the electric storage device 10 and a member arranged in the X-axis direction relative to the electric storage device 10 (a terminating part 31 as a part of the holding part 3 in this embodiment). Each of the adjacent members 2 of this embodiment is made of a resin. The adjacent member 2 forms a flow passage R between the adjacent member 2 and an adjacent one of the electric storage devices 10 for allowing a fluid for temperature adjustment (gas such as air in an example of this embodiment) to flow therethrough. The adjacent members 2 include a plurality of types of adjacent members 2A, 2B, and 2C.

The adjacent members 2 include an intermediate adjacent member (adjacent member) 2A, 2B disposed between two adjacent electric storage devices 10, and an end adjacent member 2C disposed between the holding part 3 and each outermost one in the X-axis direction of the electric storage devices 10. The apparatus body A of this embodiment includes a plurality of the intermediate adjacent members disposed therein. The plurality of intermediate adjacent members include a first adjacent member 2A disposed between two adjacent electric storage devices 10 and not fixed to the holding part 3, and a second adjacent member 2B disposed between two adjacent electric storage devices 10 and fixed to the holding part 3.

The electric storage apparatus 1 of this embodiment includes a plurality of the first adjacent members 2A, one second adjacent member 2B, and two (a pair of) end adjacent members 2C. The plurality of first adjacent members 2A are disposed between adjacent ones of the plurality of electric storage devices 10 except between those electric storage devices 10 between which the second adjacent member 2B is disposed.

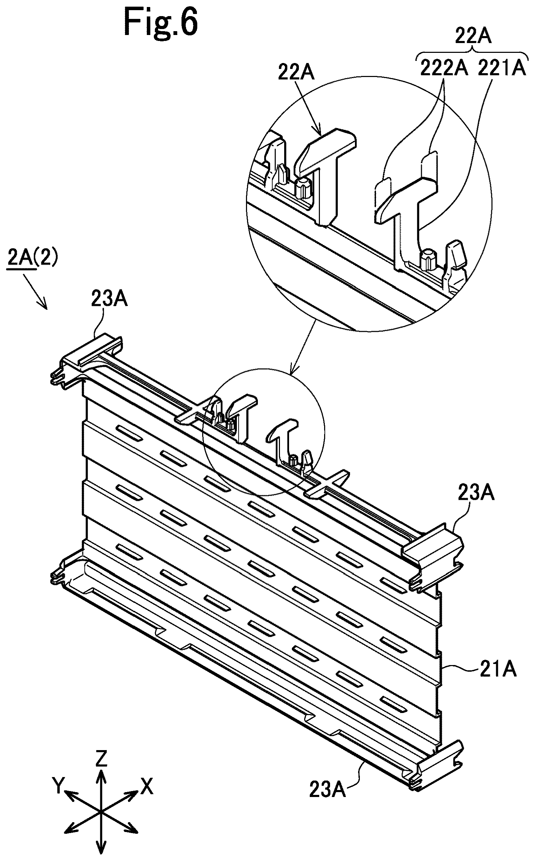

As shown also in Fig. 6, the plurality of first adjacent members 2A each include a first body (body) 21A located between the electric storage devices 10 adjacent to each other in the X-axis direction, and a first locking piece (locking piece) 22A extending from the first body 21A to lock the duct part 6. In this embodiment, locking means that two portions are in abutment (contact) with each other to thereby allow one portion to suppress the movement of the other portion. For example, the first locking piece 22A, which will be described later, is brought into abutment with a locked part 65 of the duct part 6 to engage with each other by, e.g., being hung on the locked part 65 to thereby fix the duct part 6.

Each of the first adjacent members 2A includes the first body 21A extending in a direction orthogonal to the X-axis direction between the electric storage devices 10 adjacent to each other in the X-axis direction, and the first locking piece 22A extending (projecting) from the first body 21A toward the one side in the Z-axis direction. The first locking piece 22A is configured to lock the duct part 6 relative to the first body 21A. The first adjacent member 2A includes a first restricting part 23A configured to restrict the electric storage devices 10 adjacent to the first body 21A from moving relative to the first body 21A.

The first body 21A faces the long wall 123 of the case 11 of the electric storage device 10 with a portion of the first body 21 in abutment with the long wall 123. The first body 21A forms the flow passage R for allowing the fluid for temperature adjustment to flow therethrough, in corporation with the adjacent electric storage device 10 between the first body 21A and the adjacent electric storage device 10. The first body 21A of this embodiment has a rectangular plate shape large enough to face the entire surface of the long wall 123 of the case 11 of the electric storage device 10 as viewed from the X-axis direction, and has a rectangular corrugated shape in cross section along an X-Z plane (i.e., plane including the X-axis direction and the Z-axis direction).

The two first locking pieces 22A extend from the one end in the Z-axis direction of the first body 21A with a distance in the Y-axis direction therebetween. The distance in the Y-axis direction between the two first locking pieces 22A corresponds to the dimension in the Y-axis direction of the duct part 6 (i.e., has such a dimension as to be capable of locking the locked part 65 of the duct part 6 to be described later). The first locking pieces 22A extend in the Z-axis direction along the duct part 6. The first locking pieces 22A each have a plate shape with its Y-axis direction being a thickness direction (in other words, each have a plate shape along the X-Z plane).

The first locking pieces 22A each include a locking piece body 221A extending in the Z-axis direction (i.e., direction in which the gas release valve 132 is opposite to the duct part 6) from the first body 21A along the duct part 6, and a locking part 222A engaging with the duct part 6 (specifically, the locked part 65 of a duct part body 60 to be described later).

The locking piece body 221A is a strip plate-shaped portion extending straight to the one side in the Z-axis direction from the first body 21A. The locking piece body 221A of this embodiment has a strip plate shape with a constant dimension in the X-axis direction at different positions in the Z-axis direction.

The locking part 222A extends in the X-axis direction (i.e., direction in which the duct part 6 extends) from a position of the locking piece body 221A spaced away to the one side in the Z-axis direction from the first body 21. The locking part 222A of this embodiment extends to one side and an other side in the X-axis direction from the locking piece body 221A. That is, the first locking piece 22A includes two locking parts 222A.

The first restricting part 23A extends in the X-axis direction from a corner part of the rectangular first body 21A, and is configured to be in abutment with the electric storage device 10 (specifically, the case 11) adjacent to the first body 21 A from an outside in the Y-Z plane direction to thereby restrict relative movement of the electric storage device 10 in the Y-Z plane direction with respect to the first body 21A. The first restricting part 23A of this embodiment extends to the one side and the other side in the X-axis direction from the first body 21A.

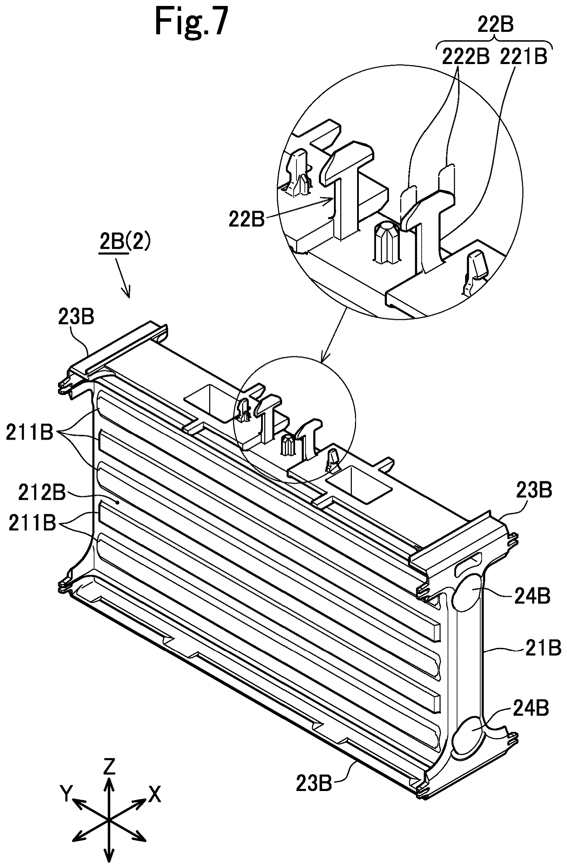

As shown in Fig. 7, the second adjacent member 2B includes a second body (body) 21B positioned between the electric storage devices 10 adjacent to each other in the X-axis direction, and a second locking piece (locking piece) 22B extending from the second body 21B and configured to lock the duct part 6.

The second adjacent member 2B includes the second body 21B extending in a direction orthogonal to the X-axis direction between the electric storage devices 10 adjacent to each other in the X-axis direction, and the second locking piece 22B extending (projecting) from the second body 21B toward the one side in the Z-axis direction to lock the duct part 6 to the second body 21B. In this embodiment, the second adjacent member 2B includes two second locking pieces 22B. The second adjacent member 2B includes a second restricting part 23B for restricting the electric storage devices 10 adjacent to the second body 21B from moving relative to the second body 21B, and a second fixing part 24B used for fixing the second adjacent member 2B to the holding part 3.

The second body 21B faces the long wall 123 of the case 11 of the electric storage device 10 with a portion of the second body 21B in abutment with the long wall 123. The second body 21B forms the flow passage R for allowing the fluid for temperature adjustment to flow therethrough, in corporation with the adjacent electric storage device 10 between the second body 21B and the electric storage device 10. The second body 21B of this embodiment has a larger dimension in the X-axis direction (that is, has a larger thickness) than the dimension in the X-axis direction of the first body 21A. The second body 21B has a rectangular plate shape large enough to face the entire surface of the long wall 123 of the case 11 of the electric storage device 10 as viewed from the X-axis direction. The second body 21B has a plurality of ridges 211B extending in the Y-axis direction and arranged at intervals from each other in the Z-axis direction. The plurality of ridges 211B project from a facing surface 212B of the second body 21B opposite to the electric storage device 10.

The two second locking pieces 22B extend from positions on the one end in the Z-axis direction of the second body 21B with a distance in the Y-axis direction therebetween. The distance in the Y-axis direction between the two second locking pieces 22B corresponds to the dimension in the Y-axis direction of the duct part 6, similar to the case of the two first locking pieces 22A of the first adjacent member 2A (i.e., has such a dimension as to be capable of locking the locked part 65 of the duct part 6 to be described later). The second locking pieces 22B extend in the Z-axis direction along the duct part 6. The configuration of the two second locking pieces 22B is the same as the configuration of the first locking pieces 22A. Each of the second locking pieces 22B includes a locking piece body 221B and a locking part 222B.

The second restricting part 23B extends in the X-axis direction from a corner part of the rectangular second body 21B, and is configured to be in abutment with the electric storage device 10 (specifically, the case 11) adjacent to the second body 21B from the outside in the Y-Z plane direction to thereby restrict relative movement of the electric storage device 10 in the Y-Z plane direction with respect to the second body 21B. The second restricting part 23B of this embodiment extends from the one side and the other side in the X-axis direction from the second body 21B.

The second fixing part 24B is disposed at an end in the Y-axis direction of the second body 21B. The second fixing part 24B is configured to engage with the first fixing part 4 to thereby fix the second adjacent member 2B and the holding part 3 to each other. The second fixing part 24B of this embodiment is an insert nut. The first fixing part 4 of this embodiment is a bolt, and is configured to be screwed with the second fixing part 24B in the state of being inserted through the holding part 3 to fix the holding part 3 to the second adjacent member 2B.

The end adjacent members 2C each include: a third body 21C overlapping the electric storage device 10 as viewed from the X-axis direction; and a third restricting part 23C for restricting the electric storage device 10 adjacent to the third body 21C from moving relative to the third body 21C. The end adjacent member 2C forms the flow passage R for allowing the fluid for temperature adjustment to flow therethrough between the end adjacent member 2C and the adjacent electric storage device 10.

The third body 21C faces the long wall 123 of the electric storage device 10 with a portion of the third body 21C in abutment with the long wall 123. Similar to the first body 21A of the first adjacent member 2A and the second body 21B of the second adjacent member 2B, the third body 21C forms the flow passage R for allowing the fluid for temperature adjustment to flow therethrough, in corporation with the adjacent electric storage device 10 between the third body 21C and the electric storage device 10. The third body 21C of this embodiment has a rectangular plate shape large enough to face the entire surface of the long wall 123 of the case 11 of the electric storage device 10 as viewed from the X-axis direction. The third body 21C has a plurality of ridges 211C extending in the Y-axis direction and arranged at intervals from each other in the Z-axis direction. The plurality of ridges 211C project from a facing surface 212C of the third body 21C opposite to the electric storage device 10.

The third restricting part 23C extends in the X-axis direction from a corner part of the rectangular third body 21C, and is configured to be in abutment with the electric storage device 10 (specifically, the case 11) adjacent to the third body 21C from the outside in the Y-Z plane direction to thereby restrict relative movement of the electric storage device 10 in the Y-Z plane direction with respect to the third body 21C. The third restricting part 23C of this embodiment extends in the X-axis direction from the third body 21C toward the electric storage device 10.

Returning to Fig. 1 to Fig. 5, the holding part 3 is disposed to surround the stack D to thereby hold the stack D. The holding part 3 surrounds the plurality of electric storage devices 10 and the plurality of adjacent members 2 to collectively hold the plurality of electric storage devices 10 and the plurality of adjacent members 2. The holding part 3 is made of, for example, a metal or a resin.

The holding part 3 includes a pair of the terminating parts 31 disposed on both sides in the X-axis direction of the stack D, an extension part 32 extending in the X-axis direction along the stack D at a position where the extension part 32 is aligned with the stack D in the Y-axis direction, and a connecting part 33 for connecting the terminating parts 31 and the extension part 32 with each other. The holding part 3 of this embodiment includes a pair of the extension parts 32 disposed away in the Y-axis direction from each other to have the stack D located therebetween.

The terminating parts 31 are each disposed to have the end adjacent member 2C sandwiched between the terminating part 31 and the electric storage device 10 located at an end in the X-axis direction. The terminating part 31 includes a terminating part body 311 extending along the Y-Z plane direction, and a flange part 313 extending from the terminating part body 311 in a direction away in the X-axis direction from the electric storage device 10.

The terminating part body 311 has a rectangular shape large enough to face the entire surface of the long wall 123 of the case 11 of the electric storage device 10 as viewed from the X-axis direction. Specifically, the terminating part body 311 has a rectangular shape elongated in the Y-axis direction, and has a plurality of through holes 312 located on both sides in the Y-axis direction with a distance in the Z-axis direction therebetween. The flange part 313 extends in the X-axis direction and the Y-axis direction from one end in the Z-axis direction of the terminating part body 311.

The pair of extension parts 32 each include: an extension part body 320 that faces the short walls 124 of the electric storage devices 10; a first piece part 321 extending in the X-axis direction and in the Y-axis direction from one end in the Z-axis direction of the extension part body 320 along the cover plates 13 of the electric storage devices 10; a second piece part 322 extending in the X-axis direction and in the Y-axis direction from the other end in the Z-axis direction of the extension part body 320 along the closing parts 121 of the electric storage devices 10; and a pair of third piece parts 323 extending in the Z-axis direction and in the Y-axis direction from both ends in the X-axis direction of the extension part body 320 along the respective terminating parts 31.

The extension part body 320 is a plate-shaped portion extending along the short walls 124 of the plurality of electric storage devices 10, and has a plurality of vent holes 3201 penetrating in the Y-axis direction through which the fluid for temperature adjustment can flow into or out of the flow passage R, and a plurality of first fixing holes 3202 penetrating in the Y-axis direction at positions opposite to the respective second fixing parts 24B of the second adjacent member 2B. The first fixing holes 3202 have the first fixing parts 4 respectively inserted therethrough.

The first piece part 321 is a strip-shaped portion elongated in the X-axis direction, and the second piece part 322 is also a strip-shaped portion elongated in the X-axis direction. The second piece part 322 has a larger width (i.e., dimension in the Y-axis direction), except both end parts in the X-axis direction thereof, than that of the first piece part 321. The pair of third piece parts 323 each have a plurality of second fixing holes 3231 located with a distance in the Z-axis direction therebetween. The second fixing holes 3231 are located at positions opposite to the respective through holes 312 of the terminating part 31.

The connecting part 33 is configured to connect the terminating part 31 and the extension part 32 to each other in the state of being inserted through the through hole 312 of the terminating part 31 and the second fixing hole 3231 of the extension part 32 (specifically, the third piece part 323). The connecting part 33 of this embodiment is formed of a bolt 331 and a nut 332.

The insulator 5 has insulation. The insulator 5 is disposed between the extension part 32 and the stack D. The electric storage apparatus 1 includes a pair of the insulators 5. The insulator 5 covers an area of the extension part 32 opposite to the plurality of electric storage devices 10. This configuration allows the insulator 5 to provide insulation between the extension part 32 and the plurality of electric storage devices 10. The insulator 5 has ventilation areas 51 having substantially the same size and shape as those of the vent holes 3201 of the extension part body 320 at positions opposite to the respective vent holes 3201 of the extension part body 320.

The sealing part 7 is a portion or a member disposed between the apparatus body A and the duct part 6 to suppress gas leakage from occurring between the apparatus body A and the duct part 6. The sealing part 7 has a sealing part communicating hole 71 for communicating the gas release valve 132 with the guiding space S. The sealing part 7 is disposed at a position opposite to the gas release valves 132 of the electric storage devices 10 in the Z-axis direction on one end in the Z-axis direction of the apparatus body A, and extends in the X-axis direction. The sealing part 7 of this embodiment is made of a foam of, e.g., a fluorine-based, silicone-based, or urethane-based resin for sealing between the apparatus body A and the duct part 6.

The sealing part 7 is a strip-shaped member with its Y-axis direction being a width direction and its X-axis direction being a length direction, and has the sealing part communicating hole 71 at a position opposite to the gas release valve 132 of the electric storage device 10 (specifically, position overlapping the gas release valve 132 as viewed from the Z-axis direction). The sealing part 7 has a plurality of the sealing part communicating holes 71. The plurality of sealing part communicating holes 71 are arranged in a row at intervals in the X-axis direction from each other.

The sealing part 7 of this embodiment has a width (dimension in the Y-axis direction) that is substantially the same as that of the duct part 6. The sealing part communicating holes 71 each have such a shape as to be preferably similar to, more preferably the same as, the shape of the gas release valve 132 when viewed from the Z-axis direction. The sealing part communicating holes 71 each preferably have such a size as to be substantially the same as the size of the gas release valve 132 when viewed from the Z-axis direction. Each of the sealing part communicating holes 71 of this embodiment is a circular hole having the same or substantially the same diameter as that of the gas release valve 132.

The duct part 6 is disposed along the X-axis direction in the state of being opposite to the gas release valves 132 in the Z-axis direction. The duct part 6 of this embodiment extends from one of the plurality of electric storage devices 10 located at one end to one of the plurality of electric storage devices 10 located at an other end in the X-axis direction along the plurality of electric storage devices 10.

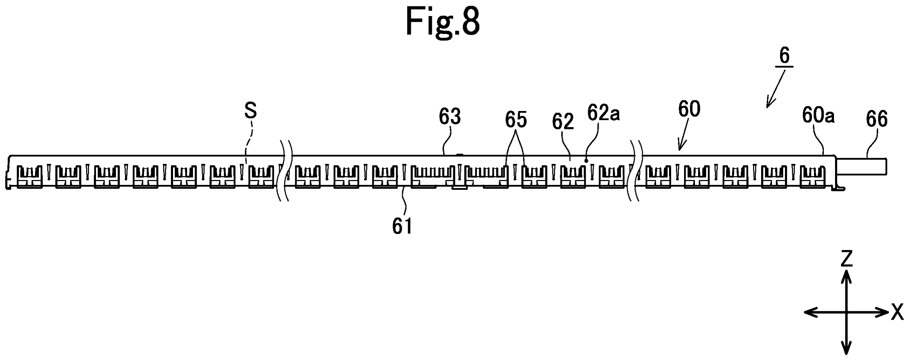

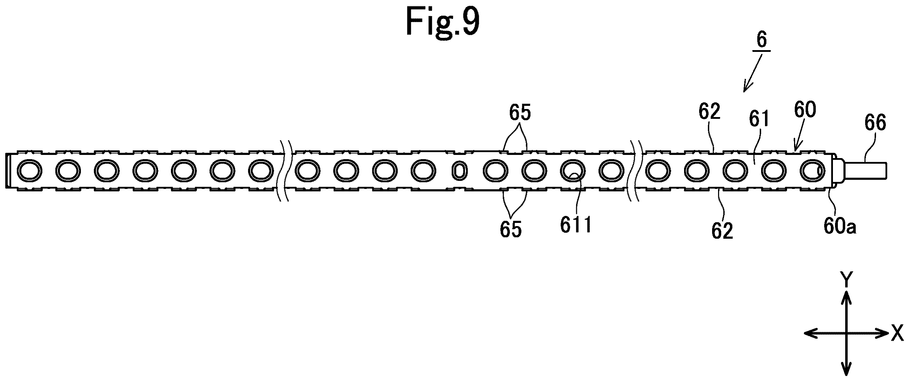

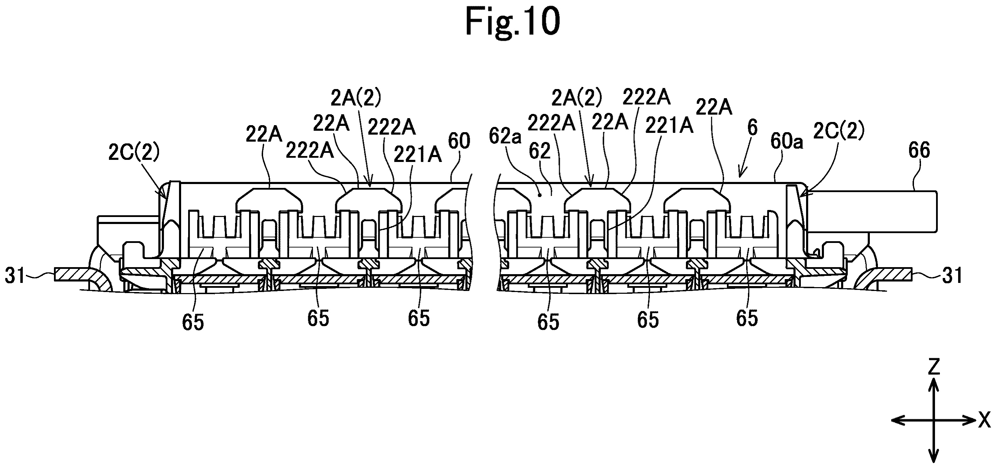

As shown also in Fig. 8 and Fig. 9, the duct part 6 includes: a duct part body 60 extending in the X-axis direction and configured to guide, in the X-axis direction, a gas released through the gas release valve 132 of each of the electric storage devices 10; and a joint part 66 extending from an end part 60a in the X-axis direction of the duct part 60. The duct part 6 also includes the locked part 65 configured to engage with the locking piece 22A, 22B (specifically, the locking part 222A, 222B of the locking piece 22A, 22B) of each of the adjacent members 2 (see Fig. 10). The duct part 6 of this embodiment is made of a resin such as polybutylene terephthalate or a glass-fiber mixed resin (polybutylene terephthalate-glass fiber).

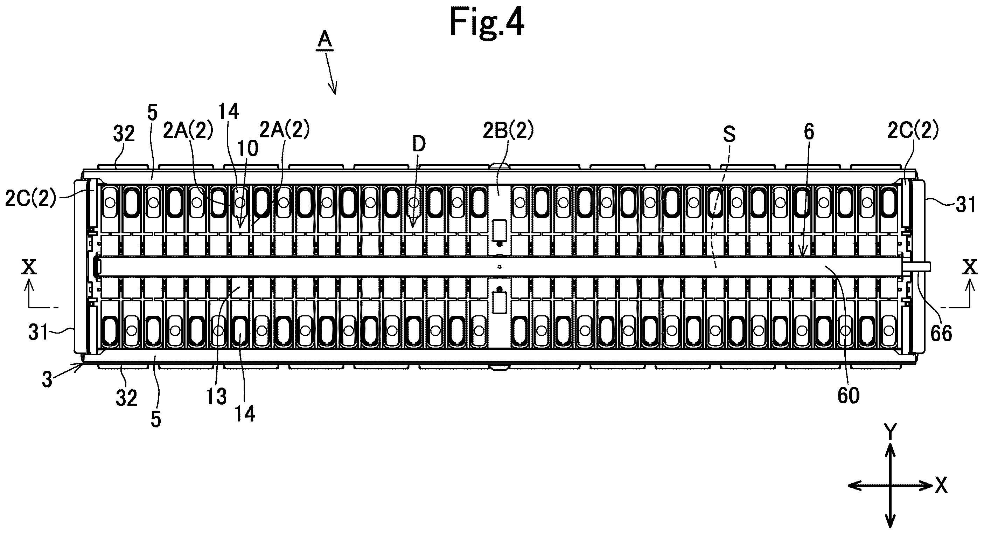

The duct part body 60 is a hollow tubular portion extending in the X-axis direction and having the guiding space S therein. The duct part body 60 of this embodiment extends from one end (on the left side in Fig. 4) to the other end (on the right side in Fig. 4) in the X-axis direction of the apparatus body A, with the one end (opposite side to the joint part 66) closed. The duct part body 60 is disposed at a position overlapping the gas release valves 132 of the electric storage devices 10 as viewed from the Z-axis direction (see Fig. 4).

The duct part body 60 has a bottom wall 61 facing the apparatus body A (the plurality of electric storage devices 10), a pair of side walls 62 extending to the one side in the Z-axis direction from both ends in the Y-axis direction of the bottom wall 61, and a top wall 63 that connects ends on the one side in the Z-axis direction of the pair of side walls 62 with each other. A space surrounded by the bottom wall 61, the pair of side walls 62, and the top wall 63 forms the guiding space S configured to be capable of guiding the gas released through the gas release valve 132 to the joint part 66.

The bottom wall 61 is a strip-shaped portion with its Y-axis direction being a width direction and its X-axis direction being a length direction, and is a portion for having the sealing part 7 sandwiched between the duct part body 60 and the apparatus body A. The bottom wall 61 has a bottom wall communicating hole 611 for communicating the sealing part communicating hole 71 and the guiding space S with each other at a position facing the sealing part communicating hole 71 of the sealing part 7 (i.e., position opposite to a corresponding one of the gas release valves 132 of the electric storage devices 10 in the Z-axis direction). The bottom wall 61 has a plurality of the bottom wall communicating holes 611. The plurality of bottom wall communicating holes 611 are arranged in a row at intervals in the X-axis direction from each other in the bottom wall 61.

Each of the pair of side walls 62 is a strip-shaped portion extending in a X-Z plane direction with its Z-axis direction being a width direction and its X-axis direction being a length direction. The pair of side walls 62 have outer surfaces 62a forming end surfaces in the Y-axis direction of the duct part 6, and the outer surfaces 62a are surfaces with which the first locking pieces 22A of the first adjacent members 2A and the second locking pieces 22B of the second adjacent member 2B are in surface contact.

The locked parts 65 are portions with which the locking pieces 22A, 22B of the adjacent members 2A, 2B are engaged (hung in this embodiment) for fixing the duct part 6 to the adjacent members 2A, 2B (that is, the apparatus body A). The locked parts 65 project outward in the Y-axis direction from the side wall 62. The plurality of locked parts 65 are disposed at intervals in the X-axis direction from each other in the side wall 62. The locked parts 65 are disposed opposite in the Y-axis direction to the positions in the X-axis direction of the bottom wall communicating holes 611 of the bottom wall 61.

The joint part 66 is connected to a different member for discharging the gas guided to the end part 60a of the duct part body 60 to the different member. The joint part 66 of this embodiment has a tubular shape communicating the guiding space S and an outer space with each other.

The duct part 6 is attached to the apparatus body A with the sealing part 7 sandwiched between the duct part 6 and the apparatus body A. As shown in Fig. 10, the locking piece bodies 221A, 221B of the adjacent members 2A, 2B are located between the locked parts 65 adjacent to each other at intervals in the X-axis direction from each other. The locking parts 222A, 222B extending from the locking piece bodies 221A, 221B are in abutment (engagement) with the locked parts 65 adjacent in the X-axis direction to the locking piece bodies 221A, 221B from the one side in the Z-axis direction. This configuration locks the duct part 6 to the apparatus body A (adjacent members 2A and 2B).

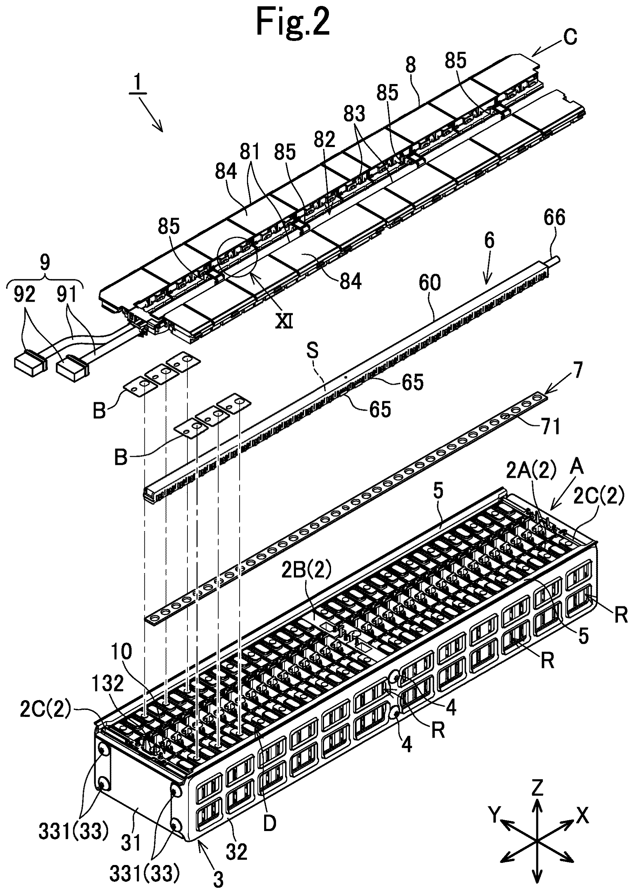

Returning to Fig. 1 and Fig. 2, the cover part C is disposed at a position at which the cover part C is in abutment with at least one of the electric storage devices 10 and the adjacent member 2 on the one side in the Z-axis direction. The cover part C is disposed on the apparatus body A for housing the bus bar B configured to conductively connect the electric storage devices 10 with each other. The cover part C of this embodiment is made of a resin, and placed to be in abutment with the apparatus body A with the duct part 6 attached hereto, from the one side in the Z-axis direction.

The cover part C includes a plurality of the bus bars B, a cover part body 8 housing (covering) the plurality of bus bars B, and a harness 9 including a plurality of electric wires connected to the plurality of bus bars B. In Fig. 2, some bus bars B out of the plurality of bus bars B disposed within the cover part C are illustrated outside the cover part C for explaining the configuration.

The plurality of bus bars B are each a plate-shaped member having conductivity, such as a metal, configured to connect the terminals 14 of different electric storage devices 10 with each other. Each of the bus bars B is used to connect the terminals 14 of the adjacent electric storage devices 10 with each other to thereby achieve conduction therebetween. The bus bars B of this embodiment are welded to the terminals 14.

The harness 9 includes a cable part 91 including the plurality of electric wires, and a connector 92 disposed at an end of the cable part 91. Other end parts of the electric wires of the cable part 91 are connected to the bus bars B while one end parts of the electric wires are connected to the connector 92.

The cable part 91 is formed by bundling at least some of the plurality of electric wires with their other end parts connected to the respective bus bars B or the like. The cable part 91 is disposed on the cover part body 8 with its one end part projecting in the X-axis direction from the cover part body 8. The connector 92 is attached to a leading end in the projecting direction of the cable part 91. The connector 92 of this embodiment is a multicore connector, and includes two connectors 92.

The cover part body 8 is made of an insulating material such as a resin, and is a plate-shaped portion or member that covers a surface of the apparatus body A on which the terminals 14 are arranged. The cover part body 8 has a rectangular shape with its dimension in the Z-axis direction smaller than the dimension in the X-axis direction and the dimension in the Y-axis direction. The cover part body 8 of this embodiment has such a size as to cover the apparatus body A as viewed from the Z-axis direction.

The cover part body 8 includes two bus bar housing parts 81 for housing the bus bars B connected to the terminals 14 of the electric storage devices 10, a duct arrangement part 82 formed between the two bus bar housing parts 81, a wire arrangement part 83 in which the harness 9 is disposed, and a plurality of cover parts 84. The cover part body 8 includes a plurality of connecting parts 85 for connecting the two bus bar housing parts 81 with each other. The plurality of connecting parts 85 are disposed at intervals in the X-axis direction from each other.

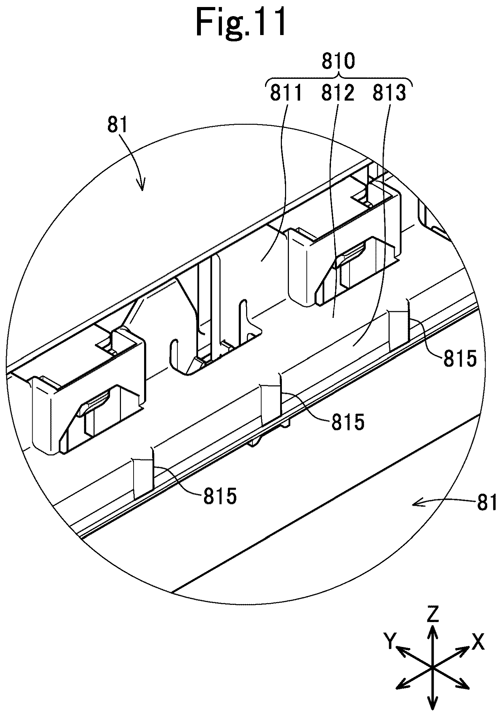

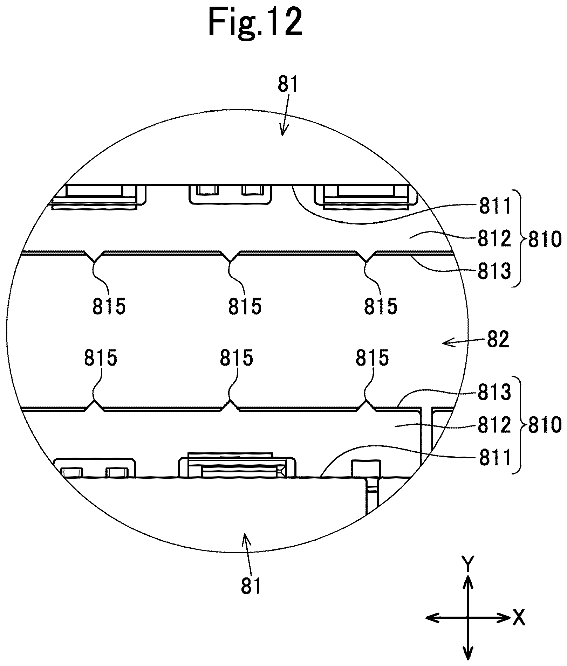

The two bus bar housing parts 81 are disposed with a distance in the Y-axis direction therebetween. As shown in Fig. 11 and Fig. 12, each of the two bus bar housing parts 81 includes a housing part body 810 housing the bus bars B with at least one (two in this embodiment) bus bar B surrounded by a wall, and a projecting part 815 disposed inside in the Y-axis direction of the housing part body 810 for restricting the movement of the locking piece 22A, 22B that locks the duct part 6. Each of the two bus bar housing parts 81 of this embodiment includes a plurality of the projecting parts 815. The plurality of projecting parts 815 are disposed at positions in the X-axis direction opposite to the locking pieces 22A, 22B of the intermediate adjacent members 2A, 2B. In the electric storage apparatus 1 of this embodiment, each of the projecting parts 815 constitutes the aforementioned abutment part (i.e., portion or member that presses the locking piece 22A, 22B toward the duct part 6).

The housing part body 810 includes: a bus bar holding part 811 holding the bus bar B in the state of being surrounded by the wall; a first portion 812 extending inward in the Y-axis direction from the bus bar holding part 811 in cross section along the Y-Z plane direction; and a second portion 813 extending to the other side in the Z-axis direction from a distal end of the first portion 812 in cross section along the Y-Z plane direction.

The first portion 812 is a strip plate-shaped portion with its Y-axis direction being a width direction and its X-axis direction being a length direction, while the second portion 813 is a strip plate-shaped portion with its Z-axis direction being a width direction and its X-axis direction being a length direction.

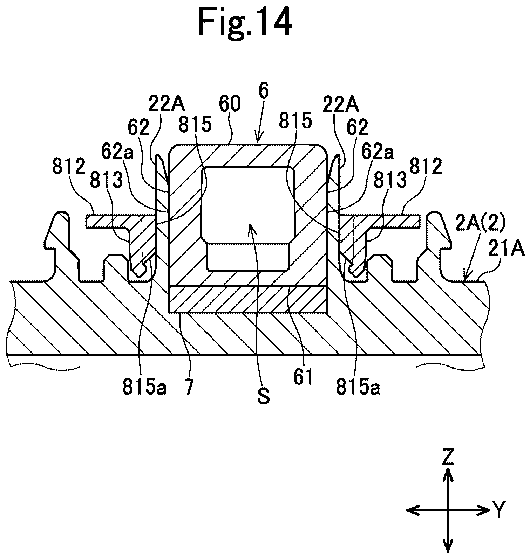

The plurality of projecting parts 815 project inward in the Y-axis direction from the second portion 813, and extend in the Z-axis direction. As shown in Fig. 13 and Fig. 14, the projecting parts 815 are disposed at positions opposite in the Y-axis direction to the locking pieces 22A, 22B that lock the duct part 6 to the adjacent members 2A, 2B, and are in abutment with the locking pieces 22A, 22B from the outside in the Y-axis direction. Each of the projecting parts 815 of this embodiment presses the locking piece 22A, 22B that locks the duct part 6 toward the duct part 6 in the Y-axis direction.

The projecting part 815 of this embodiment has a triangular prism shape with its dimension in the X-axis direction smaller as it advances toward a leading end of the projecting direction (Y-axis direction) (see Fig. 12 and Fig. 13), and has an inclined surface 815a positioned outward in the Y-axis direction as it advances toward the other side in the Z-axis direction, at the other end part in the Z-axis direction (see Fig. 14).

The duct arrangement part 82 is formed by a space between the two bus bar housing parts 81, and is an area in which the duct part (i.e., duct part in the state where the locking pieces 22A, 22B of the adjacent members 2A, 2B are engaged with (hung on) the locked parts 65) 6 in the state of being attached to the apparatus body A is located. The duct arrangement part 82 extends from one end to the other end in the X-axis direction of the cover part body 8, and has a dimension in the Y-axis direction corresponding to the dimension in the Y-axis direction of the duct part 6 (a dimension large enough to house therein the duct part 6 and the locking pieces 22A, 22B that lock the duct part 6 on both sides in the Y-axis direction). The other side in the Z-axis direction of the duct arrangement part 82 is open. When the cover part C is attached to the apparatus body A, the duct part 6 enters the duct arrangement part (i.e., space between the two bus bar housing parts 81) 82 through the open area.

The wire arrangement part 83 is a groove-shaped portion in the cover part body 8, inside which the cable part 91 of the harness 9 is disposed.

The cover part 84 is a plate-shaped portion that openably closes an opening at one end in the Z-axis direction of the wall of the bus bar housing part 81 surrounding the bus bar(s) B. The cover part 84 has a rectangular plate shape, and has a part of its peripheral edge connected to a part of the wall surrounding the bus bar(s) B.

In the electric storage apparatus 1 configured as above, the cover part C is attached to the apparatus body A after the duct part 6 is attached to the apparatus body A.

First, the duct part 6 is pushed into a space between the pair of locking pieces 22A, 22B of the intermediate adjacent members 2A, 2B of the apparatus body A. At this time, the pair of locking pieces of the intermediate adjacent members 2A, 2B are pressed by the duct part 6 to expand and be bent (i.e., elastically deformed) in a direction in which a distance in the Y-axis direction between the distal ends of the locking pieces increases. When the duct part 6 is pushed to a position at which the duct part 6 is supposed to be disposed, the pair of locking pieces 22A, 22B return to the original state from the bent state to allow the locking parts 222A, 222B of the locking pieces 22A, 22B to be hung on (i.e., in abutment from the one side in the Z-axis direction with) the respective locked parts 65 (see Fig. 10). This configuration locks the duct part 6 to the respective intermediate adjacent members 2A, 2B. That is, the duct part 6 is fixed to the apparatus body A.

Subsequently, the cover part C (specifically, the cover part body 8) in the state of being positioned relative to the apparatus body A is placed in abutment with the apparatus body A toward the other side in the Z-axis direction, so that the duct part 6 in the state of being locked by the intermediate adjacent members 2A, 2B of the apparatus body A (that is, in the state of being attached to the apparatus body A) is fitted into the duct arrangement part (space between the two bus bar housing parts 81) 82 from the other side in the Z-axis direction.

The duct part 6 is fitted into the duct arrangement part 82 by placing the cover part C on (attached to) the apparatus body A to which the duct part 6 is attached.

In the state where the duct part 6 is fitted into the duct arrangement part 82, the bus bar housing parts 81 are disposed at adjacent positions on both sides in the Y-axis direction of the duct part 6. Each of the bus bar housing parts 81 has the projecting parts 815 at positions inside its Y-axis direction opposite to the respective locking pieces 22A, 22B in the X-axis direction; this configuration allows the projecting parts 815 to be in abutment with the respective locking pieces 22A, 22B of the intermediate adjacent members 2A, 2B that lock the duct part 6 from the outside in the Y-axis direction, so as to press the locking pieces 22A, 22B toward the duct part 6. This configuration allows the locking pieces 22A, 22B in abutment with the locked parts 65 from the one side in the Z-axis direction to be pressed at the side wall 62 of the duct part 6 (see Fig. 13 and Fig. 14).

An electric storage apparatus 1 of this embodiment configured as above includes: a plurality of electric storage devices 10 arranged in an X-axis direction (first direction), the plurality of electric storage devices 10 each including a gas release valve 132 directed in a Z-axis direction (second direction); a duct part 6 disposed to overlap the gas release valve 132 of each of the electric storage devices 10 in the Z-axis direction and configured to guide a gas discharged through the gas release valve 132; an intermediate adjacent member 2A, 2B including a body 21A, 21B located between each adjacent ones in the X-axis direction of the electric storage devices 10, and a locking piece 22A, 22B extending from the body 21A, 21B along the duct part 6 in a direction away in the Z-axis direction from the body 21A, 21B to lock the duct part 6; and a projecting part (abutment part) 815 in abutment with the locking piece 22A, 22B from an opposite side to the duct part 6 in a Y-axis direction (third direction).

The projecting part 815 is brought into abutment with the locking piece 22A, 22B from the opposite side in the Y-axis direction to the duct part 6 in the state where the duct part 6 is locked to the intermediate adjacent member 2A, 2B by the locking piece 22A, 22B, as in the configuration of the electric storage apparatus 1, so that the projecting part 815 suppresses the locking piece 22A, 22B from moving, such as deflection, to a side in the Y-axis direction away from the duct part 6. This configuration can effectively suppress the duct part 6 from moving from the position (locked position) at which the duct part 6 is locked by the locking piece 22A, 22B.

In the electric storage apparatus 1 of this embodiment, the projecting part (abutment part) 815 presses the locking piece 22A, 22B toward the duct part 6. The configuration that the locking piece 22A, 22B is pressed at the duct part 6 can further reliably suppress the locking piece 22A, 22B from moving to the direction away in the Y-axis direction from the duct part 6. Even in the case where the locking piece 22A, 22B is not pressed by the projecting part 815 and a gap resulting from, e.g., manufacturing error is formed between the locking piece 22A, 22B and the duct part 6, the configuration that the locking piece 22A, 22B is pressed at the duct part 6 by the projecting part 815 can reduce the gap. The electric storage apparatus 1 of this embodiment can further reliably suppress the duct part 6 from moving from the locked position.

The electric storage apparatus 1 of this embodiment further includes a cover part C covering a bus bar B for electrically connecting the electric storage devices 10 to each other, the cover part C being disposed at a position at which the cover part is in abutment with one of the electric storage devices 10 and the intermediate adjacent member 2A, 2B on one side in the Z-axis direction. The cover part C includes an abutment part (projecting part) 815. A part of the cover part C (projecting part 815) forms the abutment part in abutment with the locking piece 22A, 22B from an opposite side in the Y-axis direction (third direction) to the duct part 6.

As described above, the cover part C is disposed in abutment with one of the electric storage devices 10 and the intermediate adjacent member 2A, 2B on the one side in the Z-axis direction, so that the projecting part 815 is in abutment with the locking piece 22A, 22B, thereby enabling the assembly work of the electric storage apparatus 1 to be simplified as compared with the case where the abutment part (projecting part 815) is formed as a separate body from the cover part C.

It is a matter of course that the electric storage apparatus of the present invention is not limited to the aforementioned embodiment, but various modifications can be made without departing from the gist of the present invention. A configuration of an embodiment can be added to a configuration of another embodiment, and part of a configuration of an embodiment can be replaced by a configuration of another embodiment. A part of a configuration of an embodiment can be deleted.

The electric storage apparatus 1 of the aforementioned embodiment is configured such that the abutment part (i.e., portion or member in abutment with the locking piece 22A, 22B from the opposite side in the Y-axis direction to the duct part 6) is formed of a portion (projecting part) 815 of the cover part C, without limitation thereto. The abutment part can be formed as a separate body from the cover part C. The abutment part can be a separate member, part, or the like, or can be formed of a portion of a member other than the cover part (member covering or housing the bus bars B) C or the adjacent member 2.

The electric storage apparatus 1 of the aforementioned embodiment is configured such that the projecting part (abutment part) 815 presses the locking piece 22A, 22B toward the duct part 6, without limitation thereto. The configuration can be such that the projecting part (abutment part) 815 is in abutment with the locking piece 22A, 22B in the state not pressing the locking piece 22A, 22B.
In the electric storage apparatus 1 of the aforementioned embodiment, a portion (projecting part) 815 projecting from the second portion 813 of the housing part body 810 toward the locking piece 22A, 22B forms the abutment part. The projecting part 815 is configured to be in abutment with the locking piece 22A, 22B (in the aforementioned embodiment, press the locking piece 22A, 22B) to restrict the movement of the locking piece 22A, 22B, without limitation thereto.

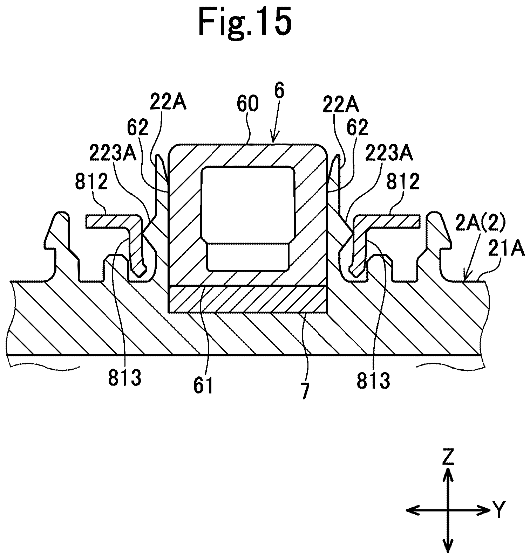

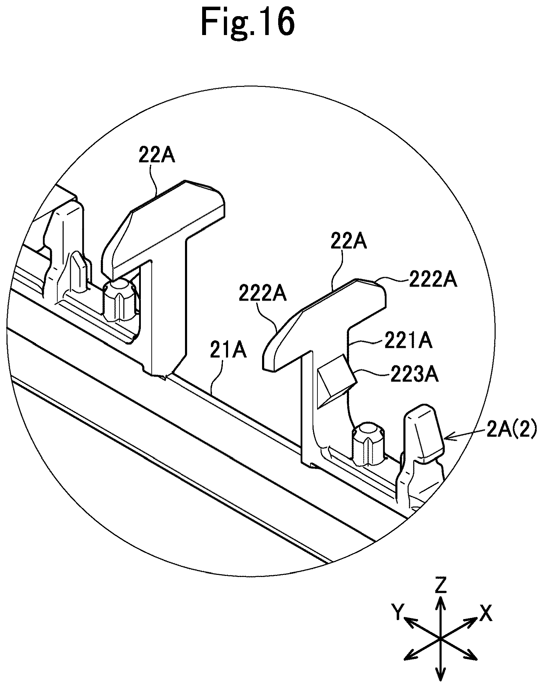

As shown in Fig. 15 and Fig. 16, the configuration can be such that a protruding part 223A protruding from the locking piece body 221A, 221B of the locking piece 22A, 22B outward in the Y-axis direction (toward the bus bar housing part 81 of the cover part C in the example of the aforementioned embodiment) restricts the locking piece 22A, 22B from moving, e.g., outward in the Y-axis direction. In this case, the second portion 813 of the cover part C fixed to the apparatus body A (i.e., a wall-like portion extending in the X-Z plane direction) is the abutment part. The protruding part 223A preferably has such a shape as to have an inclined part relative to a direction in which the cover part C is attached to the apparatus body A (i.e., the Z-axis direction in the example shown in Fig. 15), such as a triangular or trapezoidal shape as viewed from the X-axis direction, in terms of reducing the interference when the cover part C is attached to the apparatus body A.

The electric storage apparatus 1 of the aforementioned embodiment is configured such that one abutment part (projecting part 815) is disposed for one locking piece 22A, 22B, without limitation thereto. The configuration can be such that a single abutment part (projecting part) is disposed for a plurality of locking pieces 22A, 22B, as in the configuration that a ridge (abutment part) projecting inward in the Y-axis direction and extending in the X-axis direction from a portion fixed in position (i.e., second portion 813 in the example of the aforementioned embodiment) relative to the apparatus body A is in abutment with (presses) the plurality of locking pieces 22A, 22B disposed at intervals in the X-axis direction from each other.

The specific configuration of the projecting part (abutment part) 815 is not limited. The abutment part can have any configuration as long as it can be in abutment with (or to press) the locking piece 22A, 22B from the opposite side in the Y-axis direction to the duct part 6, and configured to be fixed in position relative to the apparatus body A.

The projecting part 815 preferably has such a shape as to have its contact part with the locking piece 22A, 22B or the cover part C formed in a linear shape. The configuration that the projecting part 815 is in linear contact with the locking piece 22A, 22B or the cover part C reduces the interference when the cover part C is attached to the apparatus body A, and thus enables the cover part C to be easily attached. The linear contact part can have a plane shape in about several centimeters.

The aforementioned embodiment has been described by taking, for example, the case where the electric storage device is used as a rechargeable nonaqueous electrolyte secondary cell (lithium-ion secondary battery cell), but the electric storage device can have an arbitrary type and size (capacity). The present invention is applicable also to various secondary battery cells as well as primary battery cells and electric storage devices for capacitors such as electric double layer capacitors.

The present invention has been appropriately and sufficiently described as above through embodiments with reference to the drawings in order to express the present invention, but it shall be recognized that those skilled in the art could easily modify and/or improve the aforementioned embodiments. Therefore, it shall be construed that any modified embodiment or improved embodiment by those skilled in the art is covered by the scope of the claims unless they depart from scope of the claims.

### REFERENCE SIGNS LIST

1: Electric storage apparatus
2: Adjacent member
2A: First adjacent member (intermediate adjacent member, adjacent member)
21A: First body (body)
22A: First locking piece (locking piece)
221A: Locking piece body
222A: Locking part
223A: Protruding part
23A: First restricting part
2B: Second adjacent member (intermediate adjacent member, adjacent member)
21B: Second body (body)
211B: Ridge
212B: Facing surface
22B: Second locking piece (locking piece)
221B: Locking piece body
222B: Locking part
23B: Second restricting part
24B: Second fixing part
2C: End adjacent member
21C: Third body
211C: Ridge
212C: Facing surface
23C: Third restricting part
3: Holding part
31: Terminating part
311: Terminating part body
312: Through hole
313: Flange part
32: Extension part
320: Extension part body
3201: Vent hole
3202: First fixing hole
321: First piece part
322: Second piece part
323: Third piece part
3231: Second fixing hole
33: Connecting part
331: Bolt
332: Nut
4: First fixing part
5: Insulator
51: Ventilation area
6: Duct part
60: Duct part body
60a: End part
61: Bottom wall
611: Bottom wall communicating hole
62: Side wall
62a: Outer surface
63: Top wall
65: Locked part
66: Joint part
7: Sealing part
71: Sealing part communicating hole
8: Cover part body
81: Bus bar housing part
810: Housing part body
811: Bus bar holding part
812: First portion
813: Second portion
815: Projecting part (abutment part)
815a: Inclined surface
82: Duct arrangement part
83: Wire arrangement part
84: Cover part
85: Connecting part
9: Harness
91: Cable part
92: Connector
10: Electric storage device
11: Case
12: Case body
121: Closing part
122: Body part
123: Long wall
124: Short wall
13: Cover plate
131: Cover plate body
132: Gas release valve
14: Terminal
400: Electric storage module
401: Cooling structure
401a: Heat transfer plate
401b: Cooling pipe
402: Electric storage block
403: Unit cell
403a: Cell cover
403b: Positive terminal
403c: Negative terminal
403d: Gas release valve
404a: Cell holder
405: Device stack
410: End plate
411: Side frame
450: Duct apparatus
451: Gas guiding part
451a: Guiding part attaching piece
452: Leg part
452a: Leg part attaching piece
455, 456: Screw
A: Apparatus body
B: Bus bar
C: Cover part
D: Stack
R: Flow passage
S: Guiding space

## Claims

1. An electric storage apparatus comprising:
a plurality of electric storage devices arranged in a first direction, the plurality of electric storage devices each comprising a gas release valve directed in a second direction orthogonal to the first direction;
a duct part disposed to overlap the gas release valve of each of the electric storage devices in the second direction and configured to guide a gas discharged through the gas release valve;
an adjacent member comprising a body located between each adjacent ones in the first direction of the electric storage devices, and a locking piece extending from the body along the duct part in a direction away in the second direction from the body to lock the duct part; and
an abutment part in abutment with the locking piece from an opposite side to the duct part in a third direction orthogonal to the first direction and the second direction.

2. The electric storage apparatus according to claim 1, wherein the abutment part presses the locking piece toward the duct part.

3. The electric storage apparatus according to claim 1 or 2, further comprising a cover part covering a bus bar for electrically connecting the electric storage devices to each other, the cover part being disposed at a position at which the cover part is in abutment with one of the electric storage devices and the adjacent member on one side in the second direction, wherein
the duct part is disposed on the one side in the second direction of the electric storage devices, and
the cover part comprises the abutment part.
